# EUROPÄISCHE PATENTSCHRIFT

(11) **EP 1 167 938 B1**
(45) Veröffentlichungstag und Bekanntmachung des Hinweises auf die Patenterteilung: **14.03.2007**
(21) Anmeldenummer: 01115423.4
(22) Anmeldetag: 27.06.2001
(51) Int. Cl.: G01L 9/00

(54) **Druckmessvorrichtung**
Pressure measuring device
Dispositif de mesure de pression

(30) Priorität: 30.06.2000 DE 10031135
(43) Veröffentlichungstag der Anmeldung: 02.01.2002
(73) Patentinhaber: VEGA Grieshaber KG, 77709 Wolfach (DE)
(72) Erfinder: Böhler, Ewald, 77709 Wolfach (DE); Jakob, Jörn, 77709 Wolfach-Kirnbach (DE); Liehr, Manfred, 77709 Wolfach (DE)
(74) Vertreter: Patentanwälte Westphal, Mussgnug & Partner

(56) Entgegenhaltungen:
- EP-A- 0 421 394
- WO-A-99/34185
- US-A- 5 157 972

## Beschreibung

Die vorliegende Erfindung betrifft eine Druckmessvorrichtung der im Oberbegriff des Patentanspruchs 1 genannten Art.

Eine solche Druckmessvorrichtung ist z. B. aus US-A 5 157 972 bekannt.

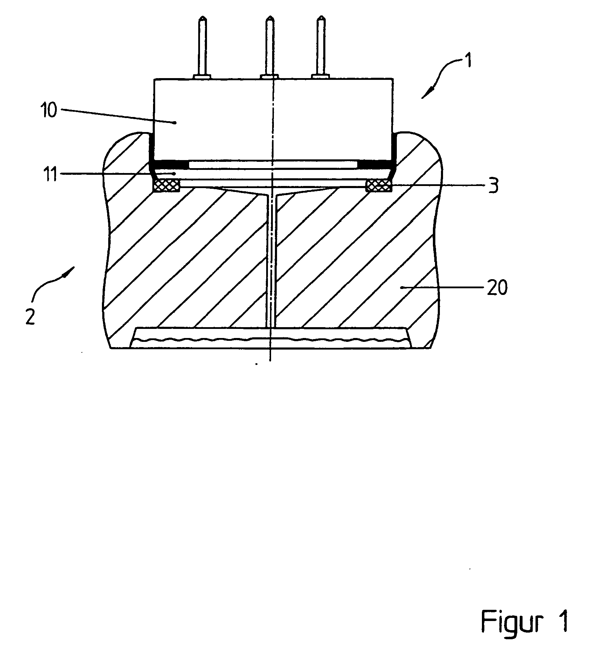

In Figur 1 ist ein Teilschnitt einer anderen bekannten Druckmessvorrichtung dargestellt. Derartige Druckmessvorrichtungen weisen zwischen dem Druckmittlergehäuse 20 des Druckmittlers 2 und dem Grundkörper 10 des Drucksensors 1 stirnseitig eine Elastomerdichtung 3 aufweist. Als Druckübertragungsmedium zwischen Druckmittler 2 und der Messmembran 11 des Drucksensors 1 ist eine Flüssigkeit, typischerweise Silikonöl oder Hydrauliköl, vorgesehen und die in gut entgastem und nahezu wasserfreien Zustand in den Druckmessumformer eingefüllt wird.

Problematisch bei solchen Druckmessvorrichtungen ist jedoch die mit der Zeit zunehmende Undichtigkeit der Elastomerdichtung zwischen Druckmittler und Drucksensor. Insbesondere kommt es bei solchen Druckmessvorrichtungen mit der Zeit und vor allem bei steigenden Temperaturen zu einer erhöhten Gasdurchlässigkeit der Elastomerdichtung. Diese Undichtigkeit der Elastomerdichtung führt dann zu einem immer grösser werdenden Messfehler. Die Gasdurchlässigkeit der Elastomerdichtung resultiert in einem Gasaustausch mit der Umgebung, der dazu führen kann, dass so viel Gas aus der Umgebung in den Drucksensor eindringen und im Druckübertragungsmedium in Lösung gehen kann, bis der Dampfdruck der in diesem Druckübertragungsmedium gelösten Gase dem Aussendruck der Gase vor der Elastomerdichtung entspricht. Tritt das im Druckübertragungsmedium gelöste Gas, beispielsweise bei einer Druckentlastung, wieder aus und füllt damit den Innenraum des Druckmittlers aus, so entsteht ein undefiniert erhöhtes und zeitlich instabiles Drucksignal, welches durch den Drucksensor gemessen wird und welches eine genaue und verlässliche Druckmessung unmöglich macht. Zusätzlich zu dem Gas kann natürlich auch Wasserdampf - beispielsweise feuchte Luft - durch die Elastomerdichtung in den Druckmessumformer eindringen. Bei Temperaturen über 100 DEG C ist der Dampfdruck des eingedrungenen Wassers grösser als der Atmosphärendruck und führt ebenfalls zu der bereits erwähnten Innendruckerhöhung des Sensors und damit zu Messfehlern.

Der vorliegenden Erfindung liegt daher die Aufgabe zugrunde, eine Druckmessvorrichtung der eingangs genannten Art bereitzustellen, die insbesondere bei höheren Temperaturen eine höhere Dichtigkeit zwischen Druckmittler und Drucksensor aufweist.

Erfindungsgemäss wird diese Aufgabe durch einen Druckmessumformer mit den Merkmalen des Patentanspruchs 1 gelöst.

Vorteilhafte Ausgestaltungen der Erfindung sind den abhängigen Ansprüchen zu entnehmen.

Es ist eine gattungsgemässe Druckmessvorrichtung vorgesehen, wobei der Drucksensor ein Verbindungsteil aus einem keramischen Werkstoff aufweist, das membranseitig mit der Messmembran über eine zweite diffusionsdichte Verbindung gekoppelt ist und das druckmittlerseitig über eine dritte Verbindung diffusionsdicht mit dem Druckmittler gekoppelt ist.

Der Adapter ist zweckmässigerweise über einen ringförmigen Flansch mit dem Verbindungsteil des Drucksensors spannungsfrei Hartlotverbunden. Da das Verbindungsteil und der Adapter typischerweise aus einem Material mit einem ähnlichen oder identischen Ausdehnungskoeffizienten aufweisen, ist damit eine langzeitstabile und diffusionsdichte Verbindung zwischen eben diesen Teilen gewährleistet. Der Adapter ist auf seiner gegenüberliegenden Stirnseite zum Druckmittlergehäuse mittels Schweissnaht an einen vorstehenden Flansch des aus Edelstahl bestehenden Druckmittlergehäuses angeschweisst. Die unterschiedlichen Ausdehnungskoeffizienten zwischen dem Adapter und dem Druckmittlergehäuse werden hier von der Schweissnaht ausgeglichen. Die ringförmig umlaufende Schweissnaht hat vorzugsweise einen kleineren Durchmesser als der ringförmige Flansch für die Hartlotverbindung. Dadurch können Spannungen zwischen dem Drucksensor und dem Druckmittler bereits durch die Schweissnahtverbindung abgebaut werden können.

Durch die vorliegende Erfindung wird gewährleistet, dass die Messmembran sowohl druckmittlerseitig als auch sensorseitig über jeweils eine diffusionsdichte Verbindung abgedichtet ist. Auf diese Weise wird sichergestellt, dass über den Drucksensor keinerlei Gase bzw. Wasserdampf in das Druckübertragungsmedium gelangen können. Dadurch bleibt die Funktionsweise des Druckmessumformers über lange Zeit hinweg und insbesondere bei hohen Temperaturen funktionsfähig.

Vorzugsweise sind die Verbindungen zwischen Messmembran und Verbindungsteil bzw. Grundkörper als kreisringförmige Glaslotverbindungen ausgeführt. Diese Glaslotringe weisen den Vorteil auf, dass sie elektrisch isolierend sind, auch bei hohen Temperaturen temperaturbeständig sind und keinerlei Diffusion von Gasen bzw. Wasserstoff von aussen nach innen zulassen.

In einer vorteilhaften Ausgestaltung ist zwischen dem Verbindungsteil und dem Druckmittlergehäuse ein Adapter vorgesehen, der über Flansche und diffusionsdichte Verbindungen mit diesen verbunden ist.

Besonders vorteilhaft ist es, wenn der Adapter und das Verbindungsteil einen gleichen oder sehr ähnlichen Temperaturausdehnungskoeffizienten aufweisen. In einer typischen Ausgestaltung bestehen sowohl der Grundkörper als auch das Verbindungsteil und der Adapter aus einem keramischen Werkstoff, dass heisst sie weisen jeweils einen ähnlichen Temperaturkoeffizienten von etwa 8 x 10⁻⁶ / K auf.

In einer bevorzugten Ausführungsform der Erfindung besteht der Grundkörper und/oder das Verbindungsteil und/oder der Adapter und/oder die Messmembran aus einem oxidischen Werkstoff wie z. B. Al₂O₃-Keramik, SiC-Keramik, Glaskeramik, Quarz oder ZrO₂-Keramik.

Als Druckübertragungsmedium wird typischerweise ein Öl, beispielsweise Hydrauliköl oder Silikonöl, verwendet.

Der Drucksensor ist vorteilhafterweise als kapazitiver Drucksensor oder als DMS-Drucksensor ausgebildet. Dabei bildet die Messmembran entweder die Schichtelektrode selbst oder eine kreisförmige oder kreisringförmige Schichtelektrode ist auf der Messmembran aufgebracht worden. Die jeweils andere Schichtelektrode des Messkondensators ist dann in der Kammer zwischen Messmembran und Grundkörper angeordnet, wobei als Dielektrikum typischerweise Vakuum oder ein gängiges, durchschlagfestes Gas verwendet wird.

Weitere vorteilhafte Ausgestaltungen und Weiterbildungen der Erfindung sind der folgenden Beschreibung und den Figuren entnehmbar.

Die Erfindung wird nachfolgend anhand der in den Figuren der Zeichnung angegebenen Ausführungsbeispiele näher erläutert. Es zeigen:
- Figur 1: einen Teilschnitt einer bekannten Druckmessvorrich tung mit einem Drucksensor und einem Druckmittler;
- Figur 2: einen Teilschnitt eines Beispiels einer Druckmessvorrichtung mit einem Drucksensor und einem Druckmittler; und
- Figur 3: einen Teilschnitt eines Ausführungsbeispiels einer erfindungsgemässen Druckmessvorrichtung, bei dem zwischen Drucksensor und Druckmittler ein Adapter vorgesehen ist.

In allen Figuren der Zeichnung sind gleiche bzw. funktionsgleiche Elemente mit gleichen Bezugszeichen versehen worden.

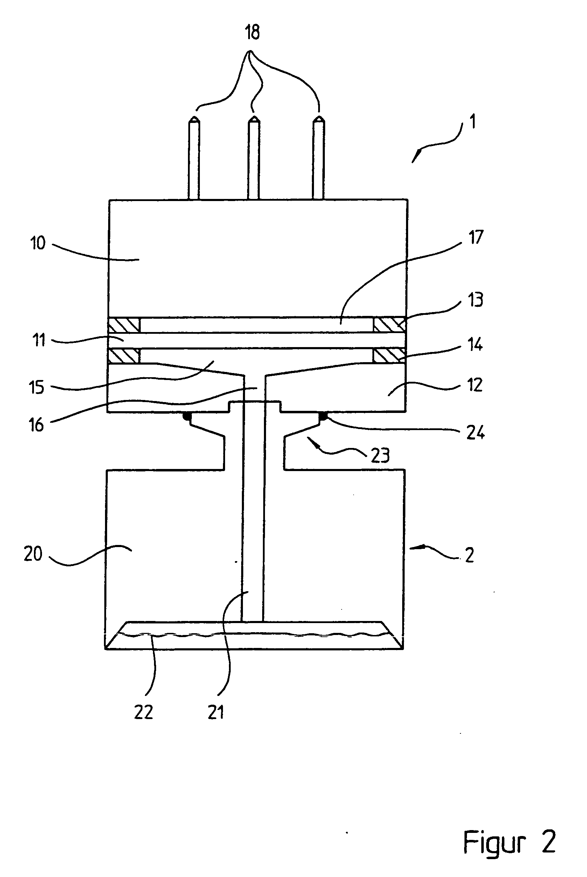

Figur 2 zeigt in einem Teilschnitt ein Beispiel einer Druckmeßvorrichtung das nicht unter die Ansprüche fällt aber zu deren besserem Verständnis dient. In Figur 2 ist mit 1 ein Drucksensor bezeichnet, der über einen Flansch 23 mit einem Druckmittler 2 verbunden ist. Der Drucksensor 1 weist einen Grundkörper 10, eine druckempfindliche Meßmembran 11 sowie ein Verbindungsteil 12 auf. Die Meßmembran 11 ist dabei zwischen dem Grundkörper 10 und dem Verbindungsteil 12 jeweils mittels einer kreisringförmigen, nach außen hin diffusionsdichten Verbindung 13, 14 gekoppelt. Typischerweise ist diese diffusionsdichte Verbindung 13, 14 als Glaslotverbindung ausgebildet. Druckmittlerseitig wird zwischen Meßmembran 11 und Verbindungsteil 12 somit eine Kammer 15 gebildet, die über eine Bohrung 16 im Verbindungsteil 12 mit dem Druckmittler 2 gekoppelt ist. Die Bohrung 16 und die Kammer 15 enthalten ein Druckübertragungsmedium - beispielsweise Silikonöl oder Hydrauliköl -, über das die Meßmembran 11 mit einem zu messenden Druck beaufschlagbar ist. Zwischen der Meßmembran 11 und dem Grundkörper 10 ist eine zweite, typischerweise evakuierte oder gasgefüllte Kammer 17 vorgesehen. Der Drucksensor 1 ist derart ausgelegt, daß der über die Meßmembran 11 einen zu messenden Druck erfaßt und in ein elektrisches Signal umwandelt, welches über elektrische Anschlußstifte 18 aus dem Drucksensor 1 auskoppelbar sind.

Der Druckmittler 2 weist ein Druckmittlergehäuse 20 auf, in das eine Bohrung 21 eingebracht ist. Sensorseitig ist der Druckmittler 2 über einen Flansch 23 an den Drucksensor 1 angekoppelt, wobei der Flansch 23 mittels einer diffusionsdichten Verbindung 24 mit dem Verbindungsteil 12 verbunden ist. Die diffusionsdichte Verbindung 24 kann dabei als Hartlotverbindung oder als Schweißnaht ausgebildet sein. An der gegenüberliegenden Seite ist an dem Druckmittlergehäuse 20 in bekannter Weise großflächig eine druckempfindliche Trennmembran angebracht, über die der Druckmittler 2 einen zu messenden Außendruck erfassen kann. Die Bohrung 21 ist formschlüssig mit der Bohrung 16 verbunden, so daß ein von der Trennmembran 22 erfaßter Druck über das Druckübertragungsmedium in den Bohrungen 16, 21 und der Kammer 15 auf die Meßmembran 11 beaufschlagbar ist.

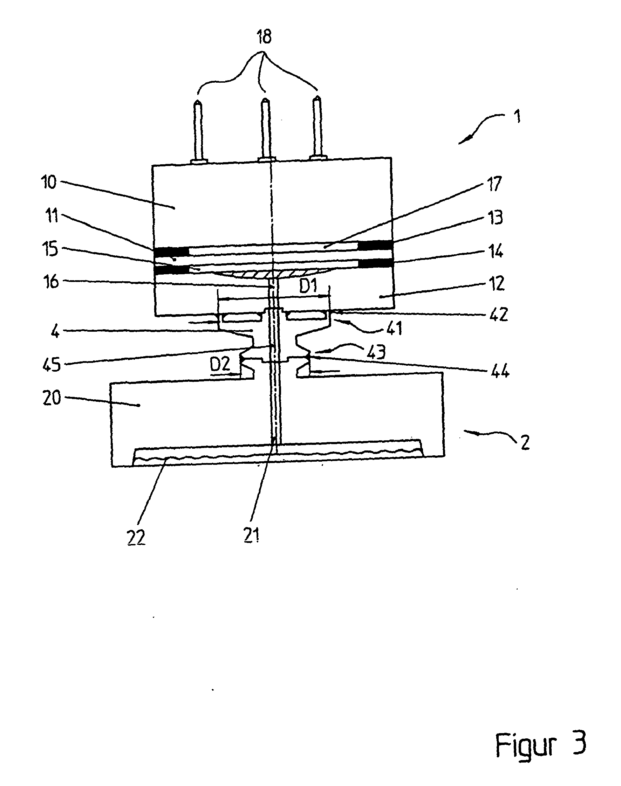

Figur 3 zeigt in einem Teilschnitt eine erfindungsgemäße, gegenüber der Druckmeßvorrichtung entsprechend Figur 2 weiterentwickelten Druckmeßvorrichtung. In Figur 3 ist zwischen dem Drucksensor 1 und dem Druckmittler 2 ein Adapter 4 vorgesehen. Der Adapter 4 ist hier über einen ersten Flansch 41 und einer ersten diffusionsdichten Verbindung 42 mit dem Verbindungsteil 12 des Drucksensors 1 und über einen zweiten Flansch 43 und eine zweite diffusionsdichte Verbindung 44 mit dem Druckmittlergehäuse 20 des Druckmittlers 2 verbunden. Der Adapter 4 weist ebenfalls eine durchgängige Bohrung 45 auf, die formschlüssig mit den Bohrungen 16, 21 verbunden ist.

Nachfolgend werden die bei den in den Figuren 2 und 3 gezeigten Druckmeßvorrichtungen verwendeten Werkstoffe näher bezeichnet:

Der Grundkörper 10 und das Verbindungsteil 12 des Drucksensors 1 sind in dem vorliegenden Ausführungsbeispiel aus einem keramischen Werkstoff gebildet, d. h. sie weisen einen Temperaturausdehnungkoeffizienten von etwa 8 x 10⁻⁶ / K auf. Das Druckmittlergehäuse 20 besteht aus einem korrosionsbeständigem Material, z. B. ebenfalls Keramik oder beispielsweise aus Edelstahl und weist somit einen Temperaturkoeffizienten von etwa 16 x 10⁻⁶ / K auf.

Der Adapter 4 zwischen dem Drucksensor 1 und Druckmittler 2 besteht im Ausführungsbeispiel in Figur 3 aus einem metallischen Werkstoff mit einem ähnlichen Temperaturkoeffizienten wie das Verbindungsteil 12.

Es wäre jedoch auch denkbar, daß der Adapter 4 aus einer Eisennickellegierung besteht. Im vorliegenden Ausführungsbeispiel ist der erste Flansch 41 zwischen dem keramischen Verbindungsteil 12 und dem metallischen Adapter 4 mittels einer ringförmigen Hartlotverbindung, Glaslotverbindung, Diffusionsschweißverbindung oder ähnliche Verbindungen, spannungsfrei verbunden. Auf der anderen Seite des Adapters 4 ist der zweite Flansch 43 zwischen dem Adapter 4 und dem Edelstahl-Druckmittlergehäuse 20 mittels einer ringförmigen Schweißnaht 44 verbunden. Besonders vorteilhaft ist es - wie in Figur 3 angedeutet - wenn der Durchmesser D1 des ersten Flansches 41 sehr viel größer ist als der Durchmesser D2 des zweiten Flansches 43. Spannungen, die zwischen dem Drucksensor 1 und dem Druckmittler 2 entstehen, können somit bereits durch den ersten Flansch 43 abgebaut werden, was langfristig zu einer verbesserten Dichtigkeit des Druckmeßumformers führt.

Die Meßmembran 11 besteht aus einem gängigen Werkstoff mit ähnlichem Ausdehnungskoeffizienten wie der Grundkörper 10 oder das Verbindungsteil 12, daß heißt die Meßmembran 11 besteht zumindest zum Teil aus einem keramischen Werkstoff. Wie bereits erwähnt, sind im vorliegenden Ausführungsbeispiel die diffusionsdichten Verbindungen 13, 14 als Glaslotverbindung ausgebildet. Selbstverständlich lassen sich diese Verbindungen auch durch jedes anderes Verbindungsmaterial realisieren, das eine ähnlich akzeptable diffusionsverhindernde Wirkung wie Glas besitzt.

### Bezugszeichenliste

- 1: Drucksensor
- 10: Grundkörper
- 11: Meßmembran
- 12: Verbindungsteil
- 13: diffusionsdichte Verbindung, Glaslotverbindung
- 14: diffusionsdichte Verbindung, Glaslotverbindung
- 15: erste Kammer
- 16: Bohrung
- 17: zweite Kammer
- 18: elektrische Anschlußstifte

- 2: Druckmittler
- 20: Druckmittlergehäuse
- 21: Bohrung
- 22: Trennmembran
- 23: Flansch
- 24: diffusionsdichte Verbindung

- 3: Elastomerdichtung

- 4: Adapter
- 41: erster Flansch
- 42: Hartlotverbindung, Diffusionslotverbindung
- 43: zweiter Flansch
- 44: Schweißnaht
- 45: Bohrung

- D1: erster Durchmesser
- D2: zweiter Durchmesser

## Patentansprüche

1. Druckmessvorrichtung
- mit einem Drucksensor (1) zur Messung des Druckes von flüssigen oder gasförmigen Medien, der einen Grundkörper (10) aufweist, an dessen einen Seite eine Messmembran (11) angeordnet ist, die mit dem Grundkörper (10) über eine erste diffusionsdichte Verbindung (13) gekoppelt ist,
- mit einem Druckmittler (2), der über ein Druckübertragungsmedium die Messmembran (11) mit einem zu messenden Druck beaufschlagt,
- mit einem Verbindungsteil (12) aus einem keramischen Werkstoff, das membranseitig mit der Messmembran (11) über eine zweite diffusionsdichte Verbindung (14) gekoppelt ist und das druckmittlerseitig über eine dritte Verbindung diffusionsdicht mit dem Druckmittler (2) gekoppelt ist,
- mit einer Adaptervorrichtung (4) zwischen Druckmittler (2) und Drucksensor (1), welche über diffusionsdichte Verbindungsmittel (41 .. 44) sowohl mit der druckempfindlichen Seite des Grundkörpers (10) als auch mit dem Druckmittlergehäuse (20) verbunden ist,
wobei die Adaptervorrichtung (4) über eine ringförmige Hartlotverbindung (42) oder Diffusionslotverbindung mit dem Verbindungsteil (12) gekoppelt ist,
**dadurch gekennzeichnet, dass**
die Adaptervorrichtung (4) über einen ringförmigen Flansch (43) und einer ringförmig den Flansch (43) umlaufenden Schweissnaht (44) mit dem Druckmittlergehäuse (20) verbunden ist, und dass der Durchmesser (D1) der Hartlotverbindung (42) bzw. Diffusionslotverbindung grösser ist als der Durchmesser (D2) der ringförmigen Schweissnaht (44).

2. Druckmessvorrichtung nach Anspruch 1,
**dadurch gekennzeichnet, dass**
die erste und/oder die zweite Verbindung (13, 14) als kreisringförmige Glaslotverbindung ausgebildet ist/sind.

3. Druckmessvorrichtung nach Anspruch 1 oder 2,
**dadurch gekennzeichnet, dass**
die Adaptervorrichtung (4) einen gleichen oder zumindest ähnlichen Temperaturausdehnungskoeffizienten wie das Verbindungsteil (12) aufweist.

4. Druckmessvorrichtung nach einem der vorstehenden Ansprüche,
**dadurch gekennzeichnet, dass**
der Grundkörper (10) und/oder das Verbindungsteil (12) und/oder die Adaptervorrichtung (4) und/oder die Messmembran (11) aus einem keramischen Werkstoff besteht/bestehen.

5. Druckmessvorrichtung nach einem der vorstehenden Ansprüche,
**dadurch gekennzeichnet, dass**
der Grundkörper (10) und/oder das Verbindungsteil (12) und/oder die Adaptervorrichtung (4) und/oder die Messmembran (11) zumindest zum Teil aus Al₂O₃-Keramik, SiC-Keramik, Glaskeramik, Quarz oder ZrO₂-Keramik besteht/bestehen.

6. Druckmessvorrichtung nach einem der Ansprüche 1 bis 5,
**dadurch gekennzeichnet, dass**
die Adaptervorrichtung (4) zumindest zum Teil aus einer Eisennickellegierung besteht.

7. Druckmessvorrichtung nach einem der vorstehenden Ansprüche,
**dadurch gekennzeichnet, dass**
das Druckmittlergehäuse (20) zumindest zum Teil aus einem metallischen Werkstoff, insbesondere aus Edelstahl, besteht.

8. Druckmessvorrichtung nach einem der Ansprüche 1 bis 7,
**dadurch gekennzeichnet, dass**
die Adaptervorrichtung (4) über einen weiteren ringförmigen Flansch (41) mit dem Verbindungsteil (12) gekoppelt ist wobei die umumlaufende Hartlotverbindung (42) oder Diffusionslotverbindung ringförmig den weiteren Flansch (41) umläuft.

9. Druckmessvorrichtung nach einem der vorstehenden Ansprüche,
**dadurch gekennzeichnet, dass**
als Druckübertragungsmedium ein Öl, insbesondere Hydrauliköl oder Silikonöl, vorgesehen ist.

10. Druckmessvorrichtung nach einem der vorstehenden Ansprüche,
**dadurch gekennzeichnet, dass**
der Drucksensor (1) als kapazitiver Drucksensor ausgebildet ist, bei dem die Messmembran (11) eine Schichtelektrode des Messkondensators bildet oder auf der Messmembran (11) eine kreisförmige oder kreisringförmige Schichtelektrode angeordnet ist.

## Claims

1. Pressure measuring device,
- comprising a pressure sensor (1) for measuring the pressure of liquid or gaseous media, said pressure sensor having a main body (10), on one side of which there is a measuring diaphragm (11) which is coupled to the main body (10) via a first diffusion-tight joint (13),
- comprising a diaphragm seal (2) which, by way of a pressure transfer medium, acts on the measuring diaphragm (11) with a pressure to be measured,
- comprising a connection part (12) made of a ceramic material which is coupled on the diaphragm side to the measuring diaphragm (11) via a second diffusion-tight joint (14), and which is coupled in a diffusion-tight manner on the diaphragm seal side to the diaphragm seal (2) via a third joint,
- comprising an adapter device (4) between the diaphragm seal (2) and the pressure sensor (1), which adapter device is connected via diffusion-tight joining means (41 ... 44) both to the pressure-sensitive side of the main body (10) and to the diaphragm seal housing (20),
wherein the adapter device (4) is coupled to the connection part (12) via an annular hard solder joint (42) or diffusion solder joint,
**characterised in that**
the adapter device (4) is connected to the diaphragm seal housing (20) via an annular flange (43) and a weld (44) running annularly around the flange (43), and **in that** the diameter (D1) of the hard solder joint (42) or diffusion solder joint is greater than the diameter (D2) of the annular weld (44).

2. Pressure measuring device according to claim 1, **characterised in that** the first and/or second joint (13, 14) is/are designed as an annular glass solder joint.

3. Pressure measuring device according to claim 1 or 2, **characterised in that** the adapter device (4) has an identical or at least similar thermal expansion coefficient to that of the connection part (12).

4. Pressure measuring device according to one of the preceding claims, **characterised in that** the main body (10) and/or the connection part (12) and/or the adapter device (4) and/or the measuring diaphragm (11) consist(s) of a ceramic material.

5. Pressure measuring device according to one of the preceding claims, **characterised in that** the main body (10) and/or the connection part (12) and/or the adapter device (4) and/or the measuring diaphragm (11) consist(s) at least in part of Al₂O₃ ceramic, SiC ceramic, glass ceramic, quartz or ZrO₂ ceramic.

6. Pressure measuring device according to one of claims 1 to 5, **characterised in that** the adapter device (4) consists at least in part of a ferronickel alloy.

7. Pressure measuring device according to one of the preceding claims, **characterised in that** the diaphragm seal housing (20) consists at least in part of a metallic material, in particular of stainless steel.

8. Pressure measuring device according to one of claims 1 to 7, **characterised in that** the adapter device (4) is coupled to the connection part (12) via a further annular flange (41), wherein the circumferential hard solder joint (42) or diffusion solder joint runs annularly around the further flange (41).

9. Pressure measuring device according to one of the preceding claims, **characterised in that** an oil, in particular hydraulic oil or silicone oil, is provided as pressure transfer medium.

10. Pressure measuring device according to one of the preceding claims, **characterised in that** the pressure sensor (1) is designed as a capacitive pressure sensor, in which the measuring diaphragm (11) forms one film electrode of the measuring capacitor, or a circular or annular film electrode is arranged on the measuring diaphragm (11).

## Revendications

1. Dispositif de mesure de pression, comprenant :
- un capteur de pression (1) pour mesurer la pression de fluides liquides ou gazeux, qui présente un corps de base (10) dont une face est munie d'une membrane de mesure (11) couplée au corps de base (10) par une première liaison (13) étanche à la diffusion,
- un transmetteur de pression (2) qui applique sur la membrane de mesure (11), par l'intermédiaire d'un fluide de transmission de pression, une pression à mesurer,
- un élément de liaison (12) en matériau céramique qui, côté membrane, est couplé à la membrane de mesure (11) par une deuxième liaison (14) étanche à la diffusion, et côté transmetteur de pression est couplé au transmetteur de pression (2) par une troisième liaison étanche à la diffusion,
- un adaptateur (4) entre le transmetteur de pression (2) et le capteur de pression (1), relié par des moyens de liaison (41 .. 44) étanches à la diffusion aussi bien au côté sensible à la pression du corps de base (10) qu'au boîtier transmetteur de pression (20), l'adaptateur (4) étant couplé à l'élément de liaison (12) par un brasage (42) annulaire ou par un brasage anti-diffusion,
**caractérisé en ce que**
l'adaptateur (4) est relié au boîtier transmetteur de pression (20) par une bride (43) annulaire et une soudure (44) entourant de façon annulaire la bride (43), et le diamètre (D1) du brasage (42) ou du brasage anti-diffusion est plus grand que le diamètre (D2) de la soudure (44) annulaire.

2. Dispositif de mesure de pression selon la revendication 1,
**caractérisé en ce que**
la première et/ou la deuxième liaison (13, 14) est/sont des liaisons en verre brasé.

3. Dispositif de mesure de pression selon la revendication 1 ou 2,
**caractérisé en ce que**
l'adaptateur (4) présente un coefficient de dilatation thermique égal ou au moins similaire à celui de l'élément de liaison (12).

4. Dispositif de mesure de pression selon l'une quelconque des revendications précédentes,
**caractérisé en ce que**
le corps de base (10) et/ou l'élément de liaison (12) et/ou l'adaptateur (4) et/ ou la membrane de mesure (11) est/ sont en matériau céramique.

5. Dispositif de mesure de pression selon l'une quelconque des revendications précédentes,
**caractérisé en ce que**
le corps de base (10) et/ou l'élément de liaison (12) et/ou l'adaptateur (4) et/ou la membrane de mesure (11) est/sont au moins en partie en céramique Al₂O₃, en céramique SiC, en vitrocéramique, en quartz ou en céramique ZrO₂.

6. Dispositif de mesure de pression selon l'une quelconque des revendications 1 à 5,
**caractérisé en ce que**
l'adaptateur (4) est au moins en partie en alliage nickel-fer.

7. Dispositif de mesure de pression selon l'une quelconque des revendications précédentes,
**caractérisé en ce que**
le boîtier transmetteur de pression (20) est au moins en partie en matériau métallique, en particulier en acier spécial.

8. Dispositif de mesure de pression selon l'une quelconque des revendications 1 à 7,
**caractérisé en ce que**
l'adaptateur (4) est couplé à l'élément de liaison (12) par une autre bride (41) annulaire, le brasage (42) ou le brasage anti-diffusion entourant l'autre bride (41) de façon annulaire.

9. Dispositif de mesure de pression selon l'une quelconque des revendications précédentes,
**caractérisé en ce que**
l'on utilise comme fluide de transmission de pression une huile, en particulier une huile hydraulique et une huile de silicone.

10. Dispositif de mesure de pression selon l'une quelconque des revendications précédentes,
**caractérisé en ce que**
le capteur de pression (1) est un capteur de pression capacitif dont la membrane de mesure (11) forme une électrode de couche du condensateur de mesure, ou une électrode de couche circulaire ou annulaire est disposée sur la membrane de mesure (11).
